# EUROPEAN PATENT APPLICATION

(11) **EP 4 610 856 A1**
(43) Date of publication of application: **03.09.2025**
(21) Application number: 25158949.5
(22) Date of filing: 19.02.2025
(51) Int. Cl.: G06F 21/56

(54) **A METHOD FOR OPTIMIZING THE ENERGY CONSUMPTION OF ANTIVIRUS SOLUTIONS**

(30) Priority: 20.02.2024 IL 31098824
(71) Applicant: Deutsche Telekom AG, 53113 Bonn (DE)
(72) Inventor: ANIDGAR, Sapir, 7775117 Ashdod (IL); BRUDNI, Sagi, 3826547 Hedera (IL); MIMRAN, David, 6215505 Tel Aviv (IL); SHABTAI, Asaf, 7684200 Hulda (IL); ELOVICI, Yuval, 7986400 Arugot (IL); BRODT, Oleg, 8471621 Beer Sheva (IL); LEHMANN, Heiko, 12587 Berlin (DE)
(74) Representative: Graf von Stosch Patentanwaltsgesellschaft mbH

(57) **Abstract**

A method for optimizing the energy consumption of antivirus software, comprising the steps of running scan operations in parallel to other user or system activity; determining the required scanning frequency, based on the risk profile identified for a specific file or a class of files; upon reaching the time to scan the file, avoiding redundant signature scanning by checking whether or not the file to be scanned is new or has been changes since the last scan; if the file to be scanned is new, using all signatures for scanning otherwise, using only new or modified signatures being relevant to the file, for scanning; reducing the number of signatures by selecting only the relevant signatures pertaining to the file from the remaining signatures; If no signatures are selected, skipping the file.

## Description

### Field of invention

This invention pertains to the field of cybersecurity. More particularly, the invention is directed to a method and system (framework) for optimizing the energy consumption of security control processes, such as antivirus software, while maintaining effective security measures.

### Background of invention

Antivirus solutions are fundamental factors in increasing cyber security and protecting workstations and computer networks against cyber-attacks. However, current antivirus solutions often consume significant amounts of energy, thereby contributing to overall operational costs and having negative environmental impact.

Traditional antivirus scanning methods involve frequent and comprehensive scanning of all files, which is not energy efficient. Therefore, there is a growing need for "greener" security solutions that are effective and at the same time, energy efficient.

It is therefore an object of the present invention to provide a framework for optimizing the energy consumption of antivirus software, while maintaining effective security measures.

It is another object of the present invention to provide a framework for optimizing the energy consumption of antivirus software, by optimizing the antivirus scanning process.

It is a further object of the present invention to provide a framework for optimizing the energy consumption of antivirus software, reducing unnecessary scans, and focusing on high-risk areas.

It is still another object of the present invention to provide a framework for optimizing the energy consumption of antivirus software, which adjusts the scan frequencies of files based on their risk, while avoiding repetitive signature scans, and selecting the relevant signatures for each file being scanned.

Other objects and advantages of the invention will become apparent as the description proceeds.

### Summary of the Invention

A method for optimizing the energy consumption of antivirus software, comprising:
a) analyzing risk profiles of files to be scanned by the antivirus software;
b) adjusting scan frequencies according to the risk profiles;
c) minimizing repetitive signature scans; and
d) selecting the relevant signatures for each file being scanned.

In one aspect, the method may comprise the steps of:
a) running scan operations in parallel to other user or system activity;
b) determining the required scanning frequency, based on the risk profile identified for a specific file or a class of files;
c) upon reaching the time to scan the file, avoiding redundant signature scanning by checking whether or not the file to be scanned is new or has been changes since the last scan;
d) if the file to be scanned is new, using all signatures for scanning otherwise, using only new or modified signatures being relevant to the file, for scanning;
e) reducing the number of signatures by selecting only the relevant signatures pertaining to the file from the remaining signatures;
f) If no signatures are selected, skipping the file.

Scanning may be performed in parallel with other tasks executed on the computerized device.

Scanning during working hours may be performed in computerized devices of organizations that pay a constant fee per kWh.

The scan frequency of each file may be adjusted based on its estimated risk level, while delaying the scanning of low-risk files.

The risk of a file may be estimated by:
a) using the meta-data attributes of the file;
b) analyzing the user's behavior; and
c) leveraging threat intelligence.

The meta-data attributes of a file may be selected from the group of:
- the file's type;
- the file permissions;
- the file owner;
- the file version;
- the file source, such as a file that is downloaded from the web.

The user's behavior may be used to predict when the user will use the file in the future.

The method may further comprise the steps of:
a) using threat intelligence for dynamically adjusting the risk profile of a file; and
b) adjusting the scan intervals according to the adjusted profile.

A machine learning model may be deployed for classifying the risk profile of a file, to determine its required scan frequency.

Prior to scanning a file, the following steps may be performed:
a) checking whether the file has been changed since its last scan or new signatures that are relevant to the file were added;
b) if either has occurred, skipping the file;
c) if the file was changed, scanning the file again, using all relevant signatures; and
d) if new signatures were added but the file remained unchanged, scanning the file only against the relevant new signatures.

Checking whether the file has changed since the last scan may be performed by observing the timestamps of the file's meta-data.

The detection and mitigation of timestomping attacks may be performed using the following techniques:
a) checking timestamps' precision in an NTFS file system;
b) identifying anomalies between timestamps of $STANDARD INFORMATION ($SI) and $FILE NAME ($FN) attributes stored in an NTFS master file table (MFT) records in NTFS file system;
c) calculating the fingerprint of the metadata of each files being scanned with the latest recorded relevant fingerprint stored in the database;
d) calculating the fingerprint of the content of each files being scanned with the latest recorded relevant fingerprint stored in the database;
e) tracking any file modification in the filesystem using log files, such as $UsnJrl or $Logfile, which are maintained by Windows by default.

Selective signatures scan may be performed by adding meta-data about the malware's target file type, for each signature in the antivirus database, thereby selecting only the relevant signatures for each file before scanning.

### Brief Description of the Drawings

The above and other characteristics and advantages of the invention will be better understood through the following illustrative and non-limitative detailed description of preferred embodiments thereof, with reference to the appended drawings, wherein:

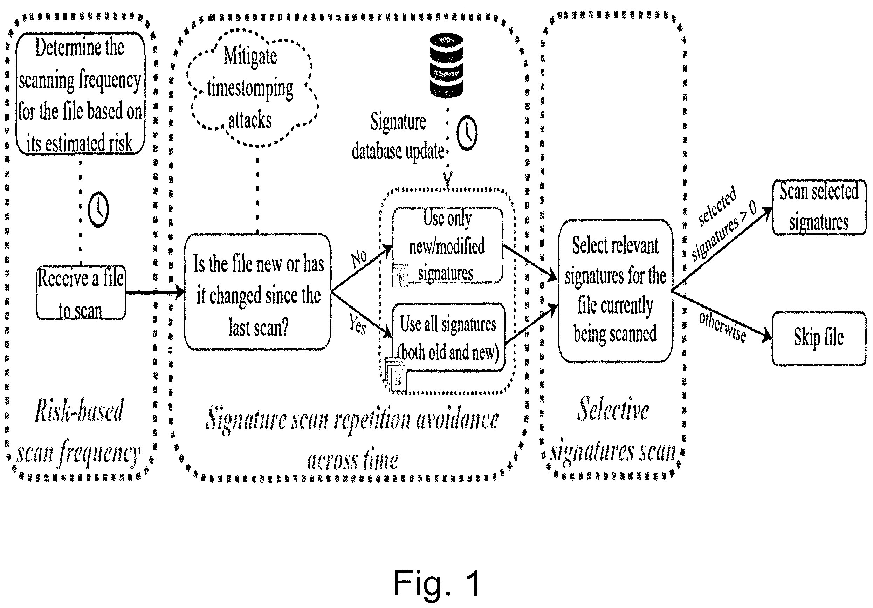

- Fig. 1 illustrates the steps performed by the proposed antivirus scan energy optimization method according to an embodiment of the invention.

### Detailed Description of the invention

Many security products rely on file signatures in order to detect malware and other malicious files. The technique involves reading or scanning a file and testing to see if the file matches a set of predetermined attributes. These attributes are known as the malware's signature. Malware signatures, which can occur in many different formats, are created by vendors and security researchers. Sets of signatures are collected in databases, some of which may be public and shared while others are contained in proprietary databases exclusive to a particular vendor.

The present invention provides a new method for reducing the energy consumption of security control processes, such as antivirus programs, without compromising their security effectiveness, based on risk-based scan frequency, signature scan repetition avoidance, and selective signature scanning. The method optimizes the energy consumption of antivirus software running on a computerized device having at least one processor and associated memory, using a dedicated operational software that performs the steps of analyzing the risk profile of files by a dedicated operational software, and adjusting scan frequencies accordingly, thereby avoiding repetitive signature scans, and selecting the relevant signatures for each file that is being scanned.

The proposed antivirus energy optimization method consists of several optimization operations that are performed in coordination with each other. The method generally comprises the steps of upon scheduling files for scanning, running the scan operations concurrently with other user or system activity(this is true for any cybersecurity control, for example, antivirus); determining the required scanning frequency based on the risk identified for a specific file (or a class of files); avoiding redundant signature scanning by using only the new signatures, in cases for which no changes were detected in the file; further reducing the number of signatures by selecting the relevant signatures pertaining to the file from the remaining signatures.

Fig. 1 illustrates the steps performed according to the proposed antivirus scan energy optimization method. At the first step (risk-based scan frequency) the scanning frequency of a file is determined, based on its estimated risk. Then, upon reaching the time to scan the file, redundant signature scanning is avoided by checking whether or not the file to be scanned is new or has been changed since the last scan. If the file to be scanned is new or has been changed since the last antivirus scan, all the signatures (old and new) that are provided by the signature database are used for scanning. Otherwise, only new or modified signatures are used for scanning. At the next step (selective signature scan), only signatures that are relevant for the file that is being scanned are used. If one or more signatures are selected, these signatures will be used for scanning the file. If no signatures are selected, the file is skipped.

According to another embodiment, the first optimization factor is to perform antivirus scanning when not being in an idle state (a state where a computer or a program is running but not actively processing any tasks or data), based on the empirical evaluation that the computational load alongside other processes is more efficient in terms of energy consumption than running the other processes at other times. Therefore, according to the proposed method, cybersecurity-related tasks are running in parallel with other daily tasks. This approach is based on the fact that oftentimes, antivirus and other security software (e.g., backup operations) are run overnight, in order to avoid disturbing computer users during the day. Running these tools after working hours entails rousing the computerized device from sleep mode, thereby extending its overall active period. The additional duration of the computer's activity, designated specifically for security measures, results in heightened energy consumption compared to performing these tasks in parallel with other computational tasks on an already active computerized device.

This approach applies to organizations that pay a constant fee per kWh of consumed energy. In some regions, electric companies charge a higher rate for daytime electricity use and a reduced rate for use at night. In such cases, an empirical evaluation should be performed to determine the optimal cost optimization strategy.

The second optimization factor is to perform antivirus scanning according to risk-based scan frequency. This optimization approach is mainly suitable for full antivirus scans, in which all files of the device are scanned, typically at constant time intervals. Instead of determining a global scan frequency that is uniform for all files, the method of the present invention adjusts the scan frequency of each file, based on its estimated risk level. Intuitively, the more likely a file would be infected with malware and the greater the potential of resulting damage, the more frequently it should be scanned. This way, by delaying the scanning of low-risk files, only a slight decrease in the security provided by the antivirus software is introduced. Conversely, by increasing the scanning frequency of high-risk files, the security level increases. Generally, this optimization approach can fine-tune (and even enhance) the security level of antivirus scans, while maintaining a manageable energetic cost. The risk of a file can therefore be estimated by relying on its meta-data (structured reference data that helps to sort and identify attributes of the information it describes. Metadata summarizes basic information about data, which can make it easier to find, use and reuse particular instances of data), analyzing the user's behavior and leveraging threat intelligence.

The meta-data attributes of a file to be considered are the file's type, the file permissions, the file owner, the file version, and the file source. For example, , Alternate Data Stream (ADS - a feature in the Windows operating system that allows data to be associated and hidden within files. An ADS can be used to store additional information about a file, such as metadata or comments, without changing the file itself) attribute of NT File System, indicating whether the file was downloaded from the web.

It is also possible to predict when the user will use the file in the future, based on the user's behavior. This way, it is possible to avoid scanning this file in cases when the file is predicted to be left untouched in the foreseeable future.

Threat intelligence (evidence-based information about cyber attacks that cyber security experts organize and analyze) can also be used, in order to dynamically adjust the risk profile of a file (for instance, in cases where a new campaign that targets similar organizations with a vector that utilizes macros in Excel files) and then adjust the scan intervals accordingly.

The implementation of the risk-based scan frequency optimization is associated with energetic cost. For example, in cases in which an organization plans to deploy a machine learning (ML) model that classifies the risk profile of a file (in order to determine its required scan frequency), there is a need to calculate the energy consumption associated with training and classify, and compare that energetic cost with the expected energy saving during its years of service. Due to the variety of model implementations and antiviruses, such calculations should be performed by the organization, while considering the specific architectural details, and verified empirically.

The third optimization factor is to avoid signature scan repetition over time and reduce the energetic cost that originates from redundant antivirus scans over time. Redundant antivirus scans occur in cases, in which the file that is being scanned has not been changed, since its previous scan. Therefore, it cannot be assumed that the same input file would be classified differently by the antivirus at a later time, unless new signatures that are relevant to the file were published by the antivirus vendor.

Accordingly, prior to scanning a file, it is required to check whether the file has been changed since its last scan or new signatures that are relevant to the file were added. If either occurred, the file should be scanned. If neither occurred, it is not efficient to scan the file again using the same signatures and expect a different result. If the file was changed, it should be scanned again, using all relevant signatures. In cases in which new signatures were added but the file remained unchanged, the file should only be scanned against the relevant new and modified signatures, thereby reducing the number of signatures used and the required scan time. As a result, the energy consumption is reduced.

One way of file modification detection is checking whether the file has changed since the last scan is by observing the timestamps of the file's meta-data. However, relying solely on these timestamps to determine whether or not to run a scan can be dangerous. An attacker can modify the timestamps found in the file's meta-data by performing a timestomping attack (timestomping is a technique that modifies the timestamps of a file such as modify, access, create, and change times, often to mimic files that are in the same folder and blend malicious files with legitimate files) to manipulate the antivirus, and avoid the scanning using necessary old signatures.

For example, the modified timestamp of the New Technology File System (NTFS - is the file system that the Windows NT operating system uses for storing and retrieving files on hard disk drives) stores information about the last time the file was modified. A timestamp that is later than the last scan indicates that the file has been modified after the last scan. However, relying solely on these timestamps to determine whether or not to run a scan can be risky and requires incorporating timestomping detection into such optimization implementation, since an attacker can modify the timestamps found in the file's meta-data by performing a timestomping attack (the action of modifying the timestamps of a file) to manipulate the antivirus.

For that reason, timestomping detection and mitigation techniques are essential to impede the attacker's ability to evade necessary antivirus scans.

In an NT File System (NTFS), all timestamps have a precision point of 100-nanoseconds. However, most off-the-shelf timestomping tools can only modify timestamps at second-level granularity. Therefore, most timestomped timestamps will contain a trailing sequence of zeros, which is a strong indicator of timestomping, since the probability for such a timestamp to appear by chance is negligible. Another technique takes advantage of the $STANDARD_INFORMATION ($SI - contains the files ownership information together with the files permissions and associated dates and times) and $FILE_NAME ($FN - contains the actual file name itself together with the logical size (true size of file) and physical size (size of the file on the file system) of the file) attributes stored in NTFS Master File Table (MFT - a master file table is a database in which information about every file and directory on an NTFS volume is kept. An MFT will have a minimum one record for every file and directory on the NTFS logical volume. Each record contains attributes that tell the operating system how to handle the file or directory associated with the record) records. Both $SI and $FN store the file's timestamps; $SI timestamps can be modified with the Windows API, but there is no API available to change the timestamps within $FN. In addition, when modifying the file's content, only $SI is updated whereas $FN remains intact. Based on these differences, the detection technique identifies anomalies between the timestamps, such as in cases where $SI timestamps are older than $FN timestamps. When combined, these techniques can detect the bulk of timestomping attacks.

Another method for checking whether the file has changed without relying on timestamps is by fingerprinting the meta-data of all files the antivirus scanned, for example, by hashing (converting data into a fixed-size string of characters) the MFT header and storing the result. In this technique, the antivirus calculates the fingerprint of the file's meta-data before scanning a file and compares the result to the latest recorded relevant fingerprint stored in its database. If they are identical, the antivirus assumes that the file has not been modified, since the meta-data should reflect any changes to the file.

As in the case of timestomping, an attacker can tamper with the meta-data to evade antivirus scanning. However, reverting the meta-data to a previous state after changing the content of a file may result in information loss and unpredictable behavior of the file, which may pose greater risk to the attacker.

The antivirus can maintain hashes of files' content instead of files' meta-data. This method increases the confidence that the file has not been modified, but at the cost of higher energy consumption resulting from the need to process the entire file. The content hashes are calculated anyway by modern antiviruses for the purpose of checking hash signatures, and therefore, this optimization can still reduce the energy consumed by an antivirus by virtue of avoidance of signature scanning.

Another method an antivirus can use to identify files that were modified since the last scan leverages log files, such as $UsnJrl (a metafile which is also called the change journal, to maintain information of all changes occurred to files and folders on an NTFS volume, providing records for what and when changes are made and to which objects) or $Logfile (a computer-generated data file that contains information about usage patterns, activities and operations within an operating system, application, server or another device) which are maintained by Windows by default, to track any operation performed on any file. To derive conclusions, log analytics techniques are used, making this the most energy-demanding alternative for detecting timestomping attacks.

After considering the advantages and disadvantages of each timestomping detection technique in terms of security aspects and energy demands, policy makers should choose the most suitable technique for their needs (e.g., to be as energy efficient as possible or to provide as much security as possible).

Incorporating timestomping detection into optimization strategies reduces the risk of scan evasion but increase the energetic toll of the solution.

Security policy makers should choose the detection technique(s) that is the most suitable for their needs, considering both its security merits and energy demands.

The fourth optimization factor is to perform a selective signatures scan, which is responsible for intelligent selection of signatures, against which the file will be scanned. For example, in the case of a JPG file, there is no need to scan against the signature of malware that only affects executable files. Accordingly, for each signature in the antivirus database, meta-data about the malware's target file type is added. This way, only the relevant signatures will be selected for each file before scanning it, rather than automatically scanning against all the signatures.

By combining the use of both third and fourth optimization factors (i.e., selecting the subset of signatures that are relevant to the file under test from the signatures remaining after keeping solely the signatures that haven't previously been scanned against the same content), it is possible to significantly reduce the number of signatures required when scanning each file. For example, in cases in which a file has not changed since the last scan and the antivirus vendor has not published any new signatures that are relevant to the file, the antivirus can skip the scanning of this file.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A method for optimizing the energy consumption of antivirus software running on a computerized device having at least one processor and associated memory, comprising:
a) analyzing, by a dedicated operational software, risk profiles of files to be scanned by said antivirus software;
b) adjusting, by said dedicated operational software, scan frequencies according to said risk profiles;
c) minimizing, by said dedicated operational software, repetitive signature scans; and
d) selecting, by said dedicated operational software, only the relevant signatures for each file being scanned.

2. A method according to claim 1, comprising performing, by the dedicated operational software, the following steps:
a) running scan operations in parallel to other user or system activities;
b) determining the required scanning frequency, based on the risk profile identified for a specific file or a class of files;
c) upon reaching the time to scan the file, avoiding redundant signature scanning by checking whether or not the file to be scanned is new or has been changes since the last scan;
d) if the file to be scanned is new, using all signatures for scanning, otherwise, using only new or modified signatures being relevant to said file, for scanning;
e) reducing the number of signatures by selecting only the relevant signatures pertaining to the file from the remaining signatures; and
f) if no signatures are selected, skipping said file.

3. A method according to claim 1, wherein scanning is performed in parallel with other tasks executed on the computerized device.

4. A method according to claim 1, wherein scanning during working hours is performed in computerized devices of organizations that pay a constant fee per kWh.

5. A method according to claim 1, wherein the scan frequency of each file is adjusted, based on its estimated risk level, while delaying the scanning of low-risk files.

6. A method according to claim 1, wherein the risk of a file is estimated by:
a) using the meta-data attributes of said file;
b) analyzing the user's behavior; and
c) leveraging threat intelligence.

7. A method according to claim 1, wherein the meta-data attributes of a file are selected from the group of:
- the file's type;
- the file permissions;
- the file owner;
- the file version;
- the file source.

8. A method according to claim 1, further comprising predicting when the user will use the file in the future, based on the user's behavior.

9. A method according to claim 1, further comprising:
a) using threat intelligence for dynamically adjusting the risk profile of a file; and
b) adjusting the scan intervals according to the adjusted profile.

10. A method according to claim 1, further comprising deploying a machine learning model for classifying the risk profile of a file, to determine its required scan frequency.

11. A method according to claim 1, wherein prior to scanning a file, performing the following steps by the dedicated operational software:
a) checking whether the file has been changed since its last scan or new signatures that are relevant to the file were added;
b) if either has occurred, skipping said file;
c) if said file was changed, scanned said file again, using all relevant signatures; and
d) if new signatures were added but said file remained unchanged, scanning said file only against said relevant new signatures.

12. A method according to claim 11, wherein checking whether the file has changed since the last scan is performed by observing the timestamps of the file's meta-data.

13. A method according to claim 1, wherein selective signatures scan is performed by adding meta-data about the malware's target file type, for each signature in the antivirus database, thereby selecting only the relevant signatures for each file before scanning.

14. A method according to claim 1, wherein the detection and mitigation of timestomping attacks are performed by dedicated operational software according to the steps of:
a) checking timestamps' precision in NTFS file system;
b) Identifying anomalies between timestamps of $STANDARD INFORMATION ($SI) and $FILE NAME ($FN) attributes stored in NTFS master file table (MFT) records in NTFS file system;
c) calculating the fingerprint of the metadata of each files being scanned with the latest recorded relevant fingerprint stored in the database;
d) calculating the fingerprint of the content of each files being scanned with the latest recorded relevant fingerprint stored in the database; and
e) tracking any file modification in the filesystem using log files, such as $UsnJrl or $Logfile, which are maintained by Windows by default.
